# EUROPEAN PATENT SPECIFICATION

(11) **EP 4 233 418 B1**
(45) Date of publication and mention of the grant of the patent: **02.07.2025**
(21) Application number: 21883308.5
(22) Date of filing: 21.10.2021
(51) Int. Cl.: H04W 72/00, H04W 48/08, H04W 36/00, H04W 4/06

(54) **METHOD AND SYSTEM FOR HANDLING SERVICE NOTIFICATION AND CONFIGURATION FOR MBS IN 5G COMMUNICATION NETWORK**
VERFAHREN UND SYSTEM ZUR HANDHABUNG VON DIENSTBENACHRICHTIGUNGEN UND KONFIGURATION FÜR MBS IN EINEM 5G-KOMMUNIKATIONSNETZWERK
PROCÉDÉ ET SYSTÈME DE GESTION DE NOTIFICATION ET DE CONFIGURATION DE SERVICES POUR UN SERVICE MBS DANS UN RÉSEAU DE COMMUNICATION 5G

(30) Priority: 22.10.2020 IN 202041046160; 01.10.2021 IN 202041046160
(43) Date of publication of application: 30.08.2023
(73) Proprietor: Samsung Electronics Co., Ltd., Suwon-si, Gyeonggi-do 16677 (KR)
(72) Inventor: SHRIVASTAVA, Vinay Kumar, Bangalore 560037 (IN); LATHEEF, Fasil Abdul, Bangalore 560037 (IN); VAN DER VELDE, Himke, Karnataka, Bangalore 560037 (IN); BAEK, Sangkyu, Suwon-si, Gyeonggi-do 16677 (KR)
(74) Representative: Gulde & Partner
(86) International application number: PCT/KR2021/014856
(87) International publication number: WO 2022/086240

(56) References cited:
- US-A1- 2020 084 748
- US-B2- 7 437 178
- US-B2- 9 781 649
- "LTE for public safety", 31 July 2015, WILEY, UK, ISBN: 978-1-118-82986-8, article RAINER LIEBHART ET AL: "LTE FOR PUBLIC SAFETY", pages: 1 - 251, XP055238726, DOI: 10.1002/9781118829851
- OPPO: "Discussion on MBS reception of idle or inactive mode UE", 3GPP DRAFT; R2-2006801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20200817 - 20200828, 7 August 2020 (2020-08-07), Mobile Competence Centre ; 650, route des Lucioles ; F-06921 Sophia-Antipolis Cedex ; France , XP051911706
- SAMSUNG: "RRC IDLE/ INACTIVE aspects of NR MBS", 3GPP DRAFT; R2-2007673, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. e-Meeting; 20200817 - 20200828, 7 August 2020 (2020-08-07), Mobile Competence Centre ; 650, route des Lucioles ; F-06921 Sophia-Antipolis Cedex ; France , XP051912302
- HUAWEI, HISILICON: "IDLE/INACTIVE UE support for NR MBS", 3GPP DRAFT; R2-2007029, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic meeting; 20200817 - 20200828, 7 August 2020 (2020-08-07), Mobile Competence Centre ; 650, route des Lucioles ; F-06921 Sophia-Antipolis Cedex ; France , XP051911877
- ERICSSON: "Solution 2 EN clarifications", 3GPP DRAFT; S2-2007282, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20201012 - 20201023, 2 October 2020 (2020-10-02), Mobile Competence Centre ; 650, route des Lucioles ; F-06921 Sophia-Antipolis Cedex ; France , XP051938326

## Description

### [Technical Field]

Embodiments disclosed herein relate to a Fifth Generation (5G) communication network, and more particularly to methods and systems for handling a service notification and configuration for a multicast broadcast service (MBS) in the 5G communication network.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

5G New Radio (NR) is targeting support for Multicast and Broadcast services in 3GPP release 17 version of specification being prepared by 3^{rd} Generation Partnership Project (3GPP). In legacy MBMS (Multimedia Broadcast Multicast Services) were supported in a LTE (Long Term Evolution) 4G wireless systems. However, the architecture and the requirements of 5G Multicast Broadcast Services (MBS) could be very different and there is an effort in the direction of designing the architecture for the network as well as the User Equipment (UE) is in progress.

Specifically, multicast services refer to services being transmitted and availed by a set of UEs registered to a group e.g., MCPTT (Mission Critical Push-To-Talk) service. Broadcast services refer to services being transmitted and available to all the UEs in a specific coverage area where broadcast is performed and typically, UE may not need to be registered e.g., Television services. Therefore, effectively, both multicast and broadcast services are PTM (Point-To-MultiPoint) services as there is one transmitter and multiple recipient of contents. It is also possible to provide multicast and broadcast services in a PTP (Point-to-Point) manner, wherein there are multiple PTP connections to provide the same MBS services to a number of individual recipients. Apart from Multicast and Broadcast services, there are another category of services termed as Unicast services which is meant for one recipient only for this is one to one dedicated connection between transmitter and receiver.

It is possible to have PTM bearer, PTP bearer or a combination of PTM and PTP bearer to carry the same MBS service. Combination of PTM and PTP bearer may provide a lot of features with respect to increase reliability of reception of MBS service packets, efficient switching between these two modes of reception when needed e.g., because of mobility, network loading conditions or based on the user request density for the reception of the MBS service and accordingly network may decide the delivery modes and/or switching across. A bearer configuration which has possibly both legs of PTM and PTP is termed as MBS split bearer.

The principal object of the embodiments herein is to disclose methods and systems for providing notifications and configurations for Multicast/Broadcast services in a 5G network.

The method can be used to enable a reliable delivery of MBS services by introducing split radio bearer (i.e., PTP + PTM). The method can be used for group notifications for UEs in an idle/inactive state about MBS services which is more efficient when compared to legacy methods (unicast paging).

The textbook "LTE FOR PUBLIC SAFETY" to R. Liebhart et al., 2015 John Wiley & Sons, Ltd, basically explains how LTE can be used as technology enabler for Public Safety networks.

A method for selecting a cell by a user equipment (UE) to receive a Multimedia Broadcast/Multicast Service (MBMS) service in a mobile communication system which supports the MBMS service with different frequency allocations (FAs) in the same area is described in US 7,437,178 B2. In the method, a radio network controller (RNC) transmits information on an MBMS cell to the UP, and the MBMS cell information includes an MBMS offset for guaranteeing priority for cell reselection to the MBMS cell. The UE performs cell reselection using the MBMS cell information and receives the MBMS service from the reselected cell.

A method, an apparatus, and a computer program product for wireless communication according to US 9,781,649 B2 enable a user equipment operating in a current cell that provides a multimedia broadcast/multicast service to distinguish between neighboring cells that have different operational characteristics. The presence of a neighboring cell is identified while the user equipment is operating in a first cell and it is determined whether the neighboring cell provides services different from the ser-vices provided in the current cell, based on information maintained by the user equipment. The user equipment may move to the neighboring cell to obtain better or different service.

### [Disclosure of Invention]

### [Solution to Problem]

The invention is defined by the appended claims. The description that follows is subjected to this limitation. Any disclosure lying outside the scope of said claims is only intended for illustrative as well as comparative purposes. Accordingly, the embodiments herein disclose methods for handling a service notification and configuration for an MBS in a 5G communication network.

### [Brief Description of Drawings]

For a more complete understanding of the present disclosure and its advantages, reference is now made to the following description taken in conjunction with the accompanying drawings, in which like reference numerals represent like parts:
FIG. 1 illustrates an architecture for the protocol stack for a UE implementation supporting MBS services;
FIG. 2 illustrates an overview of a 5G communication network for handling a service notification and configuration for the MBS according to embodiments as disclosed herein;
FIG. 3 illustrates various hardware components of a UE according to embodiments as disclosed herein;
FIG. 4 illustrates various hardware components of a network entity according to embodiments as disclosed herein;
FIG. 5 is a flow chart illustrating a method, implemented by the UE, for handling a service notification and configuration for the MBS in the 5G communication network based on MBS information according to embodiments as disclosed herein;
FIG. 6 is a flow chart illustrating a method, implemented by the UE, for handling the service notification and configuration for the MBS in the 5G communication network based on a CN paging message according to embodiments as disclosed herein;
FIG. 7 is a flow chart illustrating a method, implemented by the UE, for handling the service notification and configuration for the MBS in the 5G communication network based on a RAN paging message according to embodiments as disclosed herein;
FIG. 8 is a flow chart illustrating a method, implemented by the network entity, for handling the service notification and configuration for the MBS in the 5G communication network based on the CN paging message according to embodiments as disclosed herein;
FIG. 9 is a flow chart illustrating a method, implemented by the network entity, for handling the service notification and configuration for the MBS in the 5G communication network based on the RAN paging message according to embodiments as disclosed herein;
FIG. 10 is a flow chart illustrating a method, implemented by the network entity, for handling the service notification and configuration for the MBS in the 5G communication network according to embodiments as disclosed herein;
FIG. 11 is a sequence flow diagram illustrating step by step operations for handling the service notification and configuration for the MBS in the 5G communication network based on the CN paging message according to embodiments as disclosed herein;
FIG. 12 is a sequence flow diagram illustrating step by step operations for handling the service notification and configuration for the MBS in the 5G communication network based on the RAN paging message according to embodiments as disclosed herein;
FIG. 13 is a flow chart illustrating a method, implemented by the UE for handling a service notification and configuration for the MBS in the 5G communication network, when the UE is in an RRC CONNECTED state according to embodiments as disclosed herein; and
FIG. 14 is a flow chart illustrating a method, implemented by the network entity, for handling the service notification and configuration for the MBS in the 5G communication network, when the UE is in the RRC CONNECTED state according to embodiments as disclosed herein.

### [Mode for the Invention]

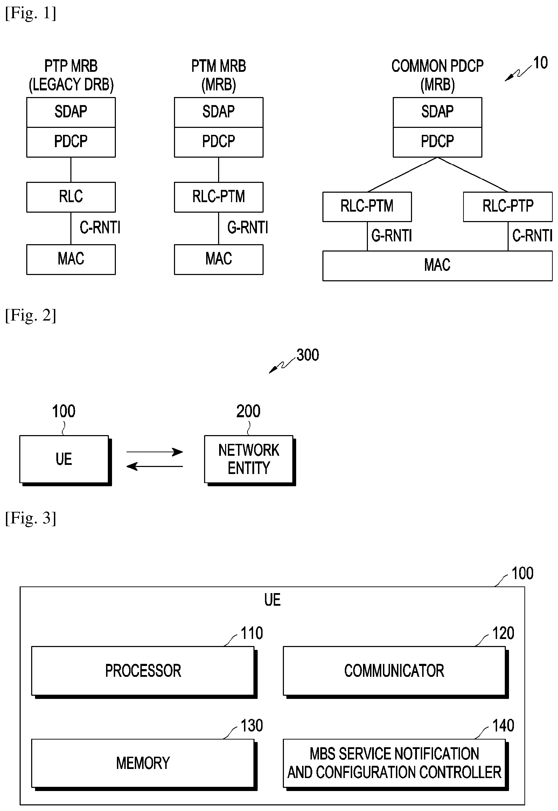

FIGS. 1 through 14, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein can be practiced and to further enable those of skill in the art to practice the embodiments herein. Accordingly, the examples should not be construed as limiting the scope of the embodiments herein.

The embodiments herein achieve methods for handling a service notification and configuration for an MBS in a 5G communication network. The method includes receiving, by a UE, an MBS information through at least one of at least one SIB or a MCCH. The MBS information includes a list of MBS services. Further, the method includes indicating, by the UE, an available list of MBS services to a service layer of the UE from a lower layer of the UE based on the received MBS information. Further, the method includes synchronizing, by the UE, an MBS service list in a user service description (USD) with the available list of MBS services based on the indication. Further, the method includes determining, by the UE, at least one of at least one available MBS service or at least one unavailable MBS service in the USD. Further, the method includes performing, by the UE, at least one of: identifying at least one interested MBS service from the at least one unavailable MBS service and sending an interest indication message to a network entity, wherein the interest indication message comprises information associated with at least one interested MBS service or identifying at least one interested MBS service from the at least one available MBS service and triggering a service join procedure.

The method can be used to enable a reliable delivery of MBS services by introducing split radio bearer (i.e., PTP + PTM). The method can be used for group notifications for UEs in an idle/inactive state about MBS services which is more efficient when compared to legacy methods (unicast paging).

Referring now to the drawings, and more particularly to FIGS. 2 through 14, where similar reference characters denote corresponding features consistently throughout the figures, there are shown at least one embodiment.

FIG. 1 illustrates the architecture 10 for the protocol stack for the UE implementation supporting MBS services. Mainly, three types of radio bearer architecture are shown, and are as follows:
1) PTP RLC bearer based (PTP MRB),
2) PTM RLC bearer based (PTM MRB), and
3) PTM + PTP RLC bearers based (MBS split bearer).

RLC PTM can be based unacknowledged mode (UM) RLC, which does not support functionality of automatic repeat request (ARQ) i.e., no RLC level transmission are supported as there is no feedback or status report between transmitting a sending RLC entity. Whereas RLC PTP can be either a UM mode or an acknowledged mode (AM) RLC. AM RLC supports status/feedback sharing from receiver to transmitter and retransmission of NACKed RLC packets from transmitter to receiver. Thereby, there is a further enhancement in the reliability that can be ensured with the AM RLC layer. Effectively, there is a lossless operation is achieved with utilizing the AM RLC mode.

PDCP layer performs reordering operation and employs a reordering timer t-Reordering to ensure the out of order packets received from RLC (from two RLCs in MBS split bearer) are re-arranged in order of their sequence numbers (SN) before expiry of reordering timer t-Reordering. In case reordering timer expires, and there is still a gap with PDCP receive window (i.e., missing a PDCP PDU SN so that reordering and in-sequence delivery could not be done to the higher layer), PDCP moves its own receive window (i.e., update its own state variable RX_DELIV) further and performs the delivery of PDCP PDUs received until window's lower edge, RX_DELIV (of course gap of missing PDCP PDU SN is also delivered).

Having an MBS split bearer with both PTM RLC and PTP RLC bearer adds to the reliability of the MBS bearer as lossless operation is achieved from the PTP path where a PTM path provides the packet with lesser delay as no retransmission is involved albeit with possible loss. With combining these two paths through the PDCP reordering operation, there is higher chances of receiving PDCP PDUs before t-Reordering expiry and providing ordered in-sequence delivery to the higher layer.

FIG. 2 illustrates an overview of a 5G communication network 300 for handling a service notification and configuration for the MBS according to embodiments as disclosed herein. In an embodiment, the 5G communication network 300 includes a UE 100 and a network entity 200. The UE 100 can be, for example, but not limited to a laptop, a desktop computer, a notebook, a relay device, a vehicle to everything (V2X) device, a smartphone, a tablet, an internet of things (IoT) device, an immersive device, a virtual reality device, a foldable device, a television with communication facility, a connected car, or the like. The network entity 200 may also include or be referred to by those skilled in the art as a base station, a base transceiver station, a radio base station, an access point, a radio transceiver, an eNB, a gNodeB (gNB), or the like.

In an embodiment, the UE 100 is configured to receive the MBS information through a SIB or a MCCH. The MBS information comprises the list of MBS services. Based on the received MBS information, the UE 100 is configured to indicate an available list of MBS services to a service layer of the UE 100 from a lower layer of the UE 100. The MBS information associated with each MBS service from the list of MBS services includes at least one field, wherein the at least one field comprises a TMGI of the MBS service, a session ID, a service type, a DRX configuration for the MBS service, MBS traffic channel (MTCH) configuration for the MBS service, neighbour cell information for the MBS service where for at least one neighbour cell same MBS service (as on serving cell) is one of available and not available, or a BWP over which MBS service, is being delivered.

The MCCH carries complete PTM configuration information and neighbor cell information for PTM service availability indication in at least one neighbor cell to support one of a cell reselection and getting connected to avail service reception through unicast. The neighbor cell information includes a bitmap with a first value indicating at least one PTM service availability in the neighbor cell and a bitmap with a second value indicating at least one PTM service unavailability in the neighbor cell, where in the at least one PTM service is provided in the serving cell.

In an embodiment, the neighbor cell information is used to select a cell where the at least one PTM service, that the UE 100 is receiving or interested to receive, is indicated as available on the neighbor cell as the source cell. In another embodiment, the neighbor cell information is used to establish a RRC connection and avail MBS service through a unicast mode, upon handover to the neighbor cell where the at least one PTM service, that the UE 100 is receiving or interested to receive, is indicated as unavailable on the neighbor cell as the source cell. In an embodiment, the cell reselection is performed with prioritizing at least one frequency over which the MBS service is currently being provided on a source cell or on a frequency for a neighbor where MBS service is available.

In an embodiment, the at least one SIB is used for providing at least one of a MCCH configuration, a notification configuration or a control information, wherein the SIB is transmitted by at least one of a periodical SIB transmission, a SIB transmission only when there is change in the SIB, or an on-demand SIB acquisition when the UE 100 does not have stored SIB information and no page or a PDCCH change is indicated, wherein the at least one SIB is provided on a cell supporting MBS. In another embodiment, the at least one SIB is used for providing mapping of at least one of a MBS services, frequencies for reception and Service Area Identities (SAIs), wherein the at least one SIB is transmitted by at least one of a periodical SIB transmission, a SIB transmission only when there is change in the at least one SIB, or an on-demand SIB acquisition when the UE 100 does not have stored SIB information, wherein the at least one SIB is provided on a cell supporting MBS and not supporting MBS.

In another embodiment, the at least one SIB is used for also providing information for the frequencies which are supporting MBS and/or supporting multicast services and/or supporting specific service area identities (SAIs) pertaining to multicast services.

Based on the indication, the UE 100 is configured to synchronize an MBS service list in the USD with the available list of MBS services. Further, the UE 100 is configured to determine the available MBS service or the unavailable MBS service in the USD. Based on the determination, the UE 100 is configured to identify the interested MBS service from the available MBS service and trigger the service join procedure. Further, the UE 100 is configured to identify the interested MBS service from the unavailable MBS service and send the interest indication message to the network entity 200. The interest indication message includes information associated with the interested MBS service.

In another embodiment, the UE 100 is configured to receive the CN paging message from the network entity 200. The CN paging message includes the MBS paging list of a TMGIs for session activation. The UE 100 is in the RRC_IDLE state. Further, the UE 100 is configured to determine the activation for the non-activated session pertaining to the UE 100 based on the CN paging message. Further, the UE 100 is configured to perform the RRC connection establishment procedure between the UE 100 and the network entity 200.

Based on the RRC connection establishment procedure, the UE 100 is configured to send the session join request to the network entity 200. Further, the UE 100 is configured to receive the RRC reconfiguration message comprising an MBS service configuration from the network entity 200 for the activated MBS service based on the session join request. Based on the RRC reconfiguration message, the UE 100 is configured to receive the MBS data from the network entity 200.

In another embodiment, the UE 100 is configured to receive the RAN paging message from the network entity 200, where the RAN paging message comprises the MBS paging list of a TMGIs for session activation. The UE 100 is in the RRC_INACTIVE state. Based on the RAN paging message, the UE 100 is configured to determine the activation for the non-activated session pertaining to the UE 100.

Further, the UE 100 is configured to perform the RRC resume procedure between the UE 100 and the network entity 200. Further, the UE 100 is configured to receive the RRC reconfiguration message comprising an MBS service configuration from the network entity 200 for the activated MBS service. Based on the RRC reconfiguration message, the UE 100 is configured to receive the MBS data from the network entity 200.

In another embodiment, the UE 100 is in the RRC_CONNECTED state. The UE 100 receives the RRC reconfiguration message comprising an MBS service configuration from the network entity 200 for the activated MBS service. Further, the UE 100 determines the activation for the non-activated session pertaining to the UE 100 based on the RRC reconfiguration message. Further, the UE 100 receives the MBS data from the network entity 200 based on the RRC reconfiguration message.

In another embodiment, the network entity 200 is configured to receive one of a RRC resume request and a RRC connection request with at least one indication from the UE 100. The UE 100 is in one of an RRC_INACTIVE state and an RRC_IDLE state. The indication comprises the low priority MBS cause, the high priority MBS cause, the mt-access cause, and the critical MBS cause. Further, the network entity 200 is configured to accept one of the RRC resume request and the RRC connection request from the UE 100 if the at least one indication comprises a high priority MBS cause, the mt-access cause and the critical MBS cause. Further, the network entity 200 is configured to reject one of the RRC resume request and the RRC connection request from the UE 100 if the at least one indication comprises a low priority MBS cause, when the 5G communication network 300 is having congestion.

In an example, embodiments herein provide a mechanism for service notification and service configuration for multicast broadcast services for new radio (NR). In the NR, there can be possibly many different deployment scenarios e.g., A1, A2, B and B-Variant as detailed:
A. A1: the UE 100 can receive MBS service in an idle/inactive mode, however, in order to receive PTM configuration, the UE 100 needs to move to a connected mode and avail PTM configuration. Post that, the UE 100 can go back to the idle/inactive mode for the reception of MBS service;
B. A2: the UE 100 can receive MBS service in the connected mode only. The idle/inactive mode, the UE 100 may move to a connected mode to receive PTM configuration and stay in the connected mode for MBS service reception; and
C. B: the UE 100 can receive MBS service configuration in the idle/inactive mode and stay in the idle/inactive mode for MBS service reception.

Scenario: A2 (or A1): the UE 100 in idle/Inactive (as well as a connected mode) may be able to identify MBS service as multicast and broadcast so as to an initiate specific joining procedure (NAS) or a bearer configuration procedure (RRC).

Method 1: broadcasted MBS service list (for multicast and broadcast services OR only for broadcast services) (applicable for an idle, an inactive, and a connected mode UEs).

In an embodiment, overall available MBS services information is broadcasted and includes a list of MBS services with each having certain fields including at least one of TMGI of the MBS service, Session Id, Service type - whether broadcast or multicast, BWP over which MBS service is being delivered. The UEs 100 in a connected mode also avail this list of services to know availability over radio access network (RAN). In general, lower layer informs the available list of services (as received in broadcast i.e., RAN signalling) to the service layer, which can sync up with the service list in USD or program guide with the availability status. Unavailable MBS services, if desired, may add to interested MBS services (may also be considered in interest indication message). Whereas, available MBS services, if desired, may cause a service join procedure.
A. The UE 100 when determining availability of desired MBS service transits to a connected state and initiates a session join procedure.
B. MBS service configuration (PTM and/or PTP) received in a connected mode dedicated signaling pertains only to requested MBS service(s) by UE 100.

Some possible use cases for service type are as follows:
A. To transit to an idle/inactive state or not? (assuming solution A1 here and broadcast service being continued in an idle mode), and
B. To transit to a connected state or not? (assuming solution B here and broadcast service being received in an idle mode itself).

In an embodiment, with assuming solution A2 (or A1), limited information is broadcasted for MBS and rest configuration is availed in a connected mode dedicated signaling. System information block (SIB) provides this broadcast and MCCH is not required.

In an embodiment, SIB providing broadcast about MBS services information accessed on demand (i.e., SIB on demand, as and when the UE 100 requires to check present MBS service availability on the present cell). Any change for the SIB contents is determined by paging (change here implies addition/deletion of an MBS service). Alternatively, the broadcasted information is delivered by MCCH (MBS control channel).

In an embodiment, operational details for the UE 100 in different modes, after accessing the broadcasted information through SIB or MCCH, are as follows:
A. A UE 100 in the idle mode sets up RRC connection, by initiating a random access procedure and then avails MBS configuration information through RRC reconfiguration message and sets up MBS radio bearer which can be either PTM or PTP or MBS split bearer (i.e., consisting of both PTM and TP reception paths);
B. An inactive mode, the UE 100 initiates an RRC resume procedure to move to a connected state and avail MBS configuration and setup MBS service. Resume request message includes an indication for critical/multicast cause to avoid any rejection or congestion related issue. As when, the gNB notices the resume request message is carrying the critical/multicast MBS service setup cause, it does not reject the request and ensure the critical/multicast service is setup successfully for the UE 100. Critical service may pertain to public safety service like MCPTT (mission critical push-to-talk) etc.; and
C. A connected mode; the UE 100 proceeds with a session join procedure for MBS service and avails MBS PTM/PTP configuration and sets up MBS service.

For scenario A1, the UE 100 after availing the PTM configuration falls back to the idle/inactive mode and continue receiving the service. In an embodiment, the UE 100 determines the MBS service requirement whether the UE can be continued in the idle/inactive mode and accordingly, determines to fall back to the idle/inactive mode or continue in the connected mode. In some cases, it could be due to coexistence of other unicast services being received in the connected mode.

In an embodiment, a UE 100, which may or may not be able to support more than N (e.g., one, two or so on) G-RNTI at a time due to the implementation capability limitation, may indicate the same to the gNB through a RRC signalling message e.g., UE capability message. Based on the UE's capability and consequently, by network configuration, actual number of G-RNTIs supported for the UE 100 is determined. Accordingly, the PTM configuration to the UE 100 is provided for which the UE 100 is configured to use less or equal to N G-RNTIs at a time. In case the DRX scheduling configuration for the MBS services are disjoint, then potentially more than N G-GNTIs can also be configured. Alternatively, the gNB can multiplex more than one MBS services over a MAC PDU or transport block (TB) which is addressed by same G-RNTI. This way, a constrained UE can also support more services simultaneously.

An example MBS configuration parameters received in a connected mode is shown in table. 1.

**[Table 1]**

| CONFIGURATIONS | FILEDS | REMARKS |
|---|---|---|
| BEARER TYPE | PTM/PTP/SPLIT | |
| PTM | G-RNTI, TMGI, SESSIONLD, ONDURAION TIME, DRX-INACTIVITY TIMER, SCHEDULINGPELIOD, STARTOFFSET | - EITHER PTM OR PTP OR SPLIT BEARER WITH BOTH PTM & PTP |
| | | - PTP TO FOLLOW PTM DRX SCHEDULING OR UNICAST DRX |
| PTP | G-RNTI, TMGI, | |
| SDAP-CONFIG | PDU-SESSION, MAPPEDQoS-FLOWSTOADD MAPPEDQoS-FLOWSTORELEASE | - SDAP-CONFIG AND PDCP-CONFIG DEPENDING ON THE COMMON PDCP OR DIFFERENT PDCP OR DIFFERENT PDCP FOR PTM AND PTP BEARERS, WILL BE COMMON OR SEPARATE |
| PDCP-CONFIG | PDCP-SN-SIZEUL PDCP-SN-SIZEDL HEADERCOMPRESSION, | |
| | STATUSREPORTREQUIRED, OUTOFFORDERDELIVERY, T-REORDERING, CIPHERINGDISABLED | - T-REORDERING SHOULD BE CONFIGURABLE BASED ON HARQ MODES APPLICABLE |
| RLC-CONFIG | PDCP-SN-SIZEUL | - DL UM RLC FOR PTM |
| | PDCP-SN-SIZEDL | - EITHER DL UM RLC OR AM |
| | HEADERCOMPRESSION, STATUSREPORTREQUIRED, OUTOFFORDERDELIVERY, T-REORDERING | RLC FOR PTP NOT |
| MAC | LOGICAL CHANNEL CONFIG | |
| HARQ | HARQ MODES | |
| BWP | BWP INFORMATION | |

In one embodiment of Method 2, group paging approach (only for multicast services) (applicable for an idle mode UEs), a group paging or group notification is employed for the UEs 100 which transited to the idle mode but interested in multicast service. The group paging message includes the TMGI as paging identity. The UE 100 responds to the group paging with a session join procedure with TMGI and transits to a connected mode. The RAN sets up PTM/PTP/MBS-split bearer for the UE 100 as detailed in method 1. For inactive mode UEs, the RAN transits the inactive mode UEs to a connected state (when MBS session context is activated by AMF). The UE 100 receives the paging from RAN. A rest procedure can be same as that for the idle mode.

In an embodiment, following possible deployment approaches for scenario A2 (or A1) include:
A. Utilize method 1 for both multicast and broadcast; or
B. Utilize method 1 for broadcast only and method 2 for multicast.

Scenario: B (applicable for broadcast and/or multicast services in an idle/inactive modes).

In one embodiment of Method 3,utilizing MCCH channel for services information, an SIB is used for providing configuration of MCCH. PDCCH based notification for change of MCCH (change implies only new service start). MCCH carries complete PTM configuration information and neighbor cell information along with same PTM configuration indication in the neighbor cell(s) to support cell reselection. The neighbor cell information could be a bitmap with value 1 indicating same PTM configuration in neighbor cell and 0 indicating different PTM configuration information in the neighbor cell. Number of total bits can be N e.g., 8 bits to indicate 8 possible neighboring cells.

In an embodiment, considering large number of MBS service configurations, some standardized/default configuration are specified (e.g., certain SDAP/PDCP/RLC/MAC configuration options may be indexed). PTM configuration for MBS service can just carry the index to refer to standardized/default configurations where applicable. This way, it helps in processing and comparison/determination of any configuration change efficiently.

In an embodiment, a cell reselection is performed with prioritizing the frequency over which MBS services is currently being provided on the source cell or on the frequency for the neighbor where MBS service is available. Neighbor cell information is used to choose the cell where the PTM service configuration is same as the source cell so as the service continuity is maintained across cell reselection with minimum interruption time.

In one embodiment of Method 4, dedicated MBS SIB, an SIB is used for providing MBS service information and configuration. Paging and/or PDCCH based notification for SIB change is provided. SIB transmission in the provided approach is undertaken as per one of the different options as follows:
A. Option 1: Periodical SIB transmission to cater to large number of UEs in an idle mode;
B. Option 2: SIB transmission only when there is change in SIB; and
C. Option 3: On-demand SIB acquisition when the UE 100 does not have stored SIB information and no page/PDCCH change is indicated.

In an embodiment, only broadcast services and/or low reliability multicast services are provided in the idle/inactive mode for the UEs 100. For such MBS services, UM mode RLC and no HARQ or HARQ without a feedback mode is used.

FIG. 3 illustrates various hardware components of the UE 100 according to embodiments as disclosed herein. The UE 100 includes a processor 110, a communicator 120, a memory 130 and an MBS service notification and configuration controller 140. The processor 110 is coupled with the communicator 120, the memory 130 and the MBS service notification and configuration controller 140.

In an embodiment, the MBS service notification and configuration controller 140 is configured to receive the MBS information through the SIB or the MCCH. The MBS information comprises the list of MBS services. Based on the received MBS information, the MBS service notification and configuration controller 140 is configured to indicate the available list of MBS services to the service layer of the UE 100 from the lower layer of the UE 100. Based on the indication, the MBS service notification and configuration controller 140 is configured to synchronize an MBS service list in the USD with the available list of MBS services. Further, the MBS service notification and configuration controller 140 is configured to determine the available MBS service or the unavailable MBS service in the USD.

Based on the determination, the MBS service notification and configuration controller 140 is configured to identify the interested MBS service from the available MBS service and trigger the service join procedure. Further, the MBS service notification and configuration controller 140 is configured to identify the interested MBS service from the unavailable MBS service and send the interest indication message to the network entity 200. The interest indication message includes information associated with the interested MBS service.

In another embodiment, the MBS service notification and configuration controller 140 is configured to receive the CN paging message from the network entity 200. The CN paging message includes the MBS paging list of a TMGIs for session activation. The UE 100 is in the RRC_IDLE state. Further, the MBS service notification and configuration controller 140 is configured to determine the activation for the non-activated session pertaining to the UE 100 based on the CN paging message. Further, the MBS service notification and configuration controller 140 is configured to perform the RRC connection establishment procedure between the UE 100 and the network entity 200.

Based on the RRC connection establishment procedure, the MBS service notification and configuration controller 140 is configured to send the session join requestto the network entity 200. Further, the MBS service notification and configuration controller 140 is configured to receive the RRC reconfiguration message comprising an MBS service configuration from the network entity 200 for the activated MBS service based on the session join request. Based on the RRC reconfiguration message, the MBS service notification and configuration controller 140 is configured to receive the MBS data from the network entity 200.

In another embodiment, the MBS service notification and configuration controller 140 is configured to receive the RAN paging message from the network entity 200, where the RAN paging message comprises the MBS paging list of a TMGIs for session activation. The UE 100 is in the RRC_INACTIVE state. based on the RAN paging message, the MBS service notification and configuration controller 140 is configured to determine the activation for the non-activated session pertaining to the UE 100.

Further, the MBS service notification and configuration controller 140 is configured to perform the RRC resume procedure between the UE 100 and the network entity 200. Further, the MBS service notification and configuration controller 140 is configured to receive the RRC reconfiguration message comprising an MBS service configuration from the network entity 200 for the activated MBS service. based on the RRC reconfiguration message, the MBS service notification and configuration controller 140 is configured to receive the MBS data from the network entity 200.

The MBS service notification and configuration controller 140 is configured to receive the RRC reconfiguration message comprising an MBS service configuration from the network entity 200 for the activated MBS service, where the UE 100 is in the RRC_CONNECTED state. Further, the MBS service notification and configuration controller 140 is configured to determine an activation for at least one non-activated session pertaining to the UE 100 based on the RRC reconfiguration message. Further, the MBS service notification and configuration controller 140 is configured to receive the MBS data from the network entity 200 based on the RRC reconfiguration message.

The the MBS service notification and configuration controller 140 is physically implemented by analog or digital circuits such as logic gates, integrated circuits, microprocessors, microcontrollers, memory circuits, passive electronic components, active electronic components, optical components, hardwired circuits, or the like, and may optionally be driven by firmware.

Further, the processor 110 is configured to execute instructions stored in the memory 130 and to perform various processes. The communicator 120 is configured for communicating internally between internal hardware components and with external devices via one or more networks. The memory 130 also stores instructions to be executed by the processor 110. The memory 130 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 130 may, in some examples, be considered a non-transitory storage medium. The term "non-transitory" may indicate that the storage medium is not embodied in a carrier wave or a propagated signal. However, the term "non-transitory" should not be interpreted that the memory 130 is non-movable. In certain examples, a non-transitory storage medium may store data that can, over time, change (e.g., in random access memory (RAM) or cache).

Further, at least one of the plurality of modules/controller may be implemented through the AI model. A function associated with the AI model may be performed through the non-volatile memory, the volatile memory, and the processor 110. The processor 110 may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU).

The one or a plurality of processors control the processing of the input data in accordance with a predefined operating rule or AI model stored in the non-volatile memory and the volatile memory. The predefined operating rule or artificial intelligence model is provided through training or learning.

Here, being provided through learning means that a predefined operating rule or AI model of a desired characteristic is made by applying a learning algorithm to a plurality of learning data. The learning may be performed in a device itself in which AI according to an embodiment is performed, and/o may be implemented through a separate server/system.

The AI model may comprise of a plurality of neural network layers. Each layer has a plurality of weight values and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

Although the FIG. 3 shows various hardware components of the UE 100 but it is to be understood that other embodiments are not limited thereon. In other embodiments, the UE 100 may include less or more number of components. Further, the labels or names of the components are used only for illustrative purpose and does not limit the scope of the disclosure. One or more components can be combined together to perform same or substantially similar function in the UE 100.

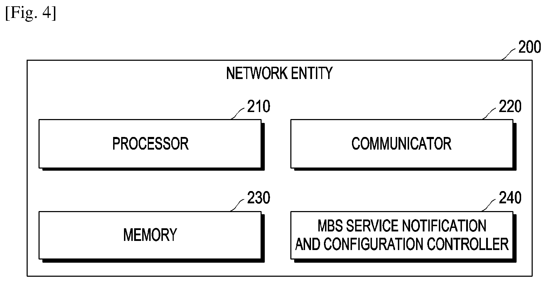

FIG. 4 shows various hardware components of the network entity 200 according to embodiments as disclosed herein. The network entity 200 includes a processor 210, a communicator 220, a memory 230 and an MBS service notification and configuration controller 240. The processor 210 is coupled with the communicator 220, the memory 230 and the MBS service notification and configuration controller 240.

In an embodiment, the MBS service notification and configuration controller 240 is configured to send the CN paging message to the UE 100. The CN paging message includes the MBS paging list of the TMGIs for session activation and the UE 100 is in the RRC_IDLE state. Further, the MBS service notification and configuration controller 240 is configured to perform the RRC connection establishment procedure between the UE 100 and the network entity 200 in response to determining the activation for at least one non-activated session pertaining to the UE 100 based on the CN paging message. Based on the RRC connection establishment procedure, the MBS service notification and configuration controller 240 is configured to receive the session join request from the UE 100.

Further, the MBS service notification and configuration controller 240 is configured to send the RRC reconfiguration message comprising the MBS service configuration to the UE 100 for the activated MBS service based on the session join request. Based on the RRC reconfiguration message, the MBS service notification and configuration controller 240 is configured to send the MBS data to the UE 100.

In another embodiment, the MBS service notification and configuration controller 240 is configured to send the RAN paging message to the UE 100. The RAN paging message includes the MBS paging list of the TMGIs for session activation and the UE 100 is in the RRC_INACTIVE state. Further, the MBS service notification and configuration controller 240 is configured to perform the RRC resume procedure between the UE 100 and the network entity 200 in response to determining the activation for at least one non-activated session pertaining to the UE 100 based on the RAN paging message.

Further, the MBS service notification and configuration controller 240 is configured to send the RRC reconfiguration message comprising the MBS service configuration to the UE 100 for the activated MBS service. Based on the RRC reconfiguration message, the MBS service notification and configuration controller 240 is configured to send the MBS data to the UE 100.

The MBS service notification and configuration controller 240 is configured to send the RRC reconfiguration message comprising the MBS service configuration to the UE 100 for the activated MBS service, where the UE 100 is in the RRC_CONNECTED state. Further, the MBS service notification and configuration controller 240 is configured to send the MBS data to the UE 100 based on the RRC reconfiguration message upon determining an activation for the non-activated session pertaining to the UE 100 based on the RRC reconfiguration message.

In another embodiment, the MBS service notification and configuration controller 240 is configured to receive one of a RRC resume request and a RRC connection request with at least one indication from the UE 100. The UE 100 is in one of an RRC_INACTIVE state and an RRC_IDLE state. The indication comprises the low priority MBS cause, the high priority MBS cause, the mt-access cause, and the critical MBS cause. Further, the MBS service notification and configuration controller 240 is configured to accept one of the RRC resume request and the RRC connection request from the UE 100 if the at least one indication comprises a high priority MBS cause, the mt-access cause and the critical MBS cause. Further, the MBS service notification and configuration controller 240 is configured to reject one of the RRC resume request and the RRC connection request from the UE 100 if the at least one indication comprises a low priority MBS cause, when the 5G communication network 300 is having congestion.

The MBS service notification and configuration controller 240 is physically implemented by analog or digital circuits such as logic gates, integrated circuits, microprocessors, microcontrollers, memory circuits, passive electronic components, active electronic components, optical components, hardwired circuits, or the like, and may optionally be driven by firmware.

Further, the processor 210 is configured to execute instructions stored in the memory 230 and to perform various processes. The communicator 220 is configured for communicating internally between internal hardware components and with external devices via one or more networks. The memory 230 also stores instructions to be executed by the processor 210. The memory 230 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 230 may, in some examples, be considered a non-transitory storage medium. The term "non-transitory" may indicate that the storage medium is not embodied in a carrier wave or a propagated signal. However, the term "non-transitory" should not be interpreted that the memory 230 is non-movable. In certain examples, a non-transitory storage medium may store data that can, over time, change (e.g., in random access memory (RAM) or cache).

Further, at least one of the plurality of modules/controller may be implemented through the AI model. A function associated with the AI model may be performed through the non-volatile memory, the volatile memory, and the processor 210. The processor 210 may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU).

The one or a plurality of processors control the processing of the input data in accordance with a predefined operating rule or AI model stored in the non-volatile memory and the volatile memory. The predefined operating rule or artificial intelligence model is provided through training or learning.

Here, being provided through learning means that a predefined operating rule or AI model of a desired characteristic is made by applying a learning algorithm to a plurality of learning data. The learning may be performed in a device itself in which AI according to an embodiment is performed, and/o may be implemented through a separate server/system.

The AI model may comprise of a plurality of neural network layers. Each layer has a plurality of weight values and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

Although the FIG. 4 shows various hardware components of the network entity 200 but it is to be understood that other embodiments are not limited thereon. In other embodiments, the network entity 200 may include less or more number of components. Further, the labels or names of the components are used only for illustrative purpose and does not limit the scope of the disclosure. One or more components can be combined together to perform same or substantially similar function in the network entity 200.

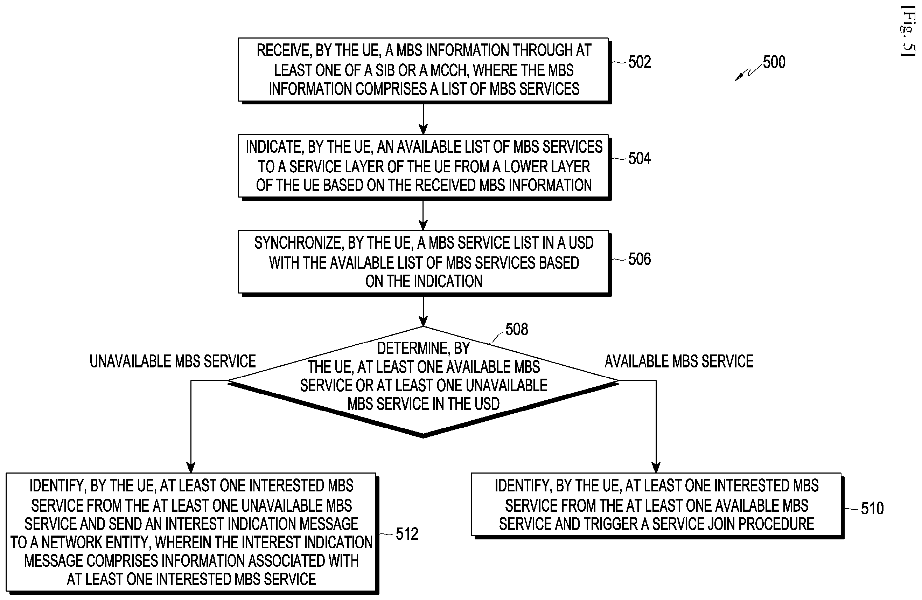

FIG. 5 is a flow chart 500 illustrating a method, implemented by the UE 100, for handling the service notification and configuration for the MBS in the 5G communication network 300 based on the MBS information according to embodiments as disclosed herein. The operations 502-512 are handled by the MBS service notification and configuration controller 140.

At 502, the method includes receiving the MBS information through the SIB or the MCCH. The MBS information comprises a list of MBS services. At 504, the method includes indicating the available list of MBS services to a service layer of the UE 100 from a lower layer of the UE 100 based on the received MBS information. At 506, the method includes synchronizing an MBS service list in the USD with the available list of MBS services based on the indication. At 508, the method includes determining the available MBS service or the unavailable MBS service in the USD.

At 510, the method includes identifying an interested MBS service from the available MBS service and triggering a service join procedure. At 512, the method includes identifying the interested MBS service from the unavailable MBS service and sending an interest indication message to the network entity 200. The interest indication message includes information associated with the interested MBS service.

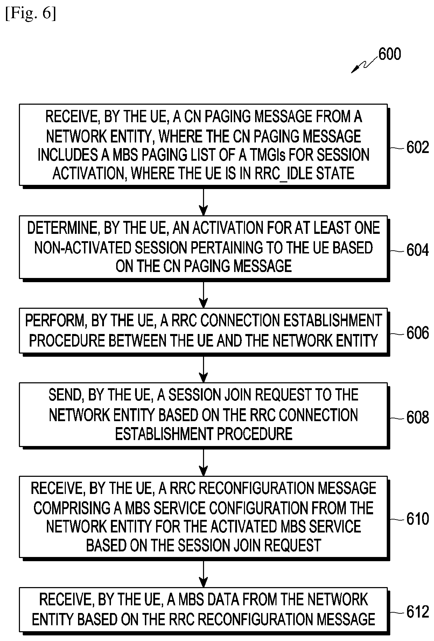

FIG. 6 is a flow chart 600 illustrating a method, implemented by the UE 100, for handling the service notification and configuration for the MBS in the 5G communication network 300 based on the CN paging message according to embodiments as disclosed herein. The operations 602-612 are handled by the MBS service notification and configuration controller 140.

At 602, the method includes receiving the CN paging message from the network entity 200. The CN paging message includes the MBS paging list of a TMGIs for session activation. The UE 100 is in the RRC_IDLE state. At 604, the method includes determining the activation for the non-activated session pertaining to the UE 100 based on the CN paging message. At 606, the method includes performing the RRC connection establishment procedure between the UE 100 and the network entity 200.

At 608, the method includes sending the session join request to the network entity 200 based on the RRC connection establishment procedure. At 610, the method includes receiving the RRC reconfiguration message comprising an MBS service configuration from the network entity 200 for the activated MBS service based on the session join request. At 612, the method includes receiving the MBS data from the network entity 200 based on the RRC reconfiguration message.

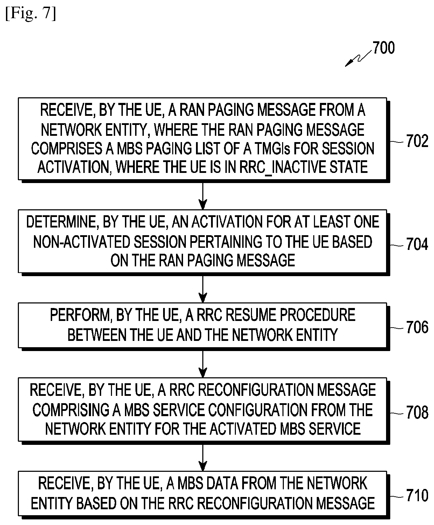

FIG. 7 is a flow chartn 700 illustrating a method, implemented by the UE 100, for handling the service notification and configuration for the MBS in the 5G communication network 300 based on the RAN paging message according to embodiments as disclosed herein. The operations 702-710 are handled by the MBS service notification and configuration controller 140.

At 702, the method includes receiving the RAN paging message from the network entity 200, where the RAN paging message comprises an MBS paging list of a TMGIs for session activation. The UE 100 is in an RRC_INACTIVE state. At 704, the method includes determining the activation for the non-activated session pertaining to the UE 100 based on the RAN paging message.

At 706, the method includes performing the RRC resume procedure between the UE 100 and the network entity 200. At 708, the method includes receiving the RRC reconfiguration message comprising an MBS service configuration from the network entity 200 for the activated MBS service. At 710, the method includes receiving an MBS data from the network entity 200 based on the RRC reconfiguration message.

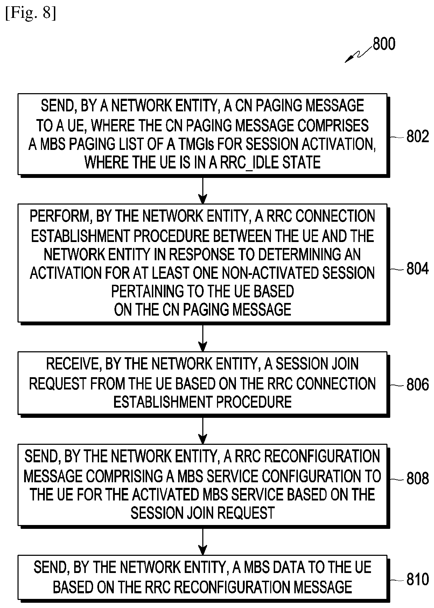

FIG. 8 is a flow chart 800 illustrating a method, implemented by the network 200, for handling the service notification and configuration for the MBS in the 5G communication network 300 based on the CN paging message according to embodiments as disclosed herein. The operations 802-810 are handled by the MBS service notification and configuration controller 240.

At 802, the method includes sending the CN paging message to the UE 100. The CN paging message includes an MBS paging list of a TMGIs for session activation and the UE 100 is in an RRC_IDLE state. At 804, the method includes performing the RRC connection establishment procedure between the UE 100 and the network entity 200 in response to determining an activation for at least one non-activated session pertaining to the UE 100 based on the CN paging message. At 806, the method includes receiving the session join request from the UE 100 based on the RRC connection establishment procedure.

At 808, the method includes sending the RRC reconfiguration message comprising an MBS service configuration to the UE 100 for the activated MBS service based on the session join request. At 810, the method includes sending an MBS data to the UE 100 based on the RRC reconfiguration message.

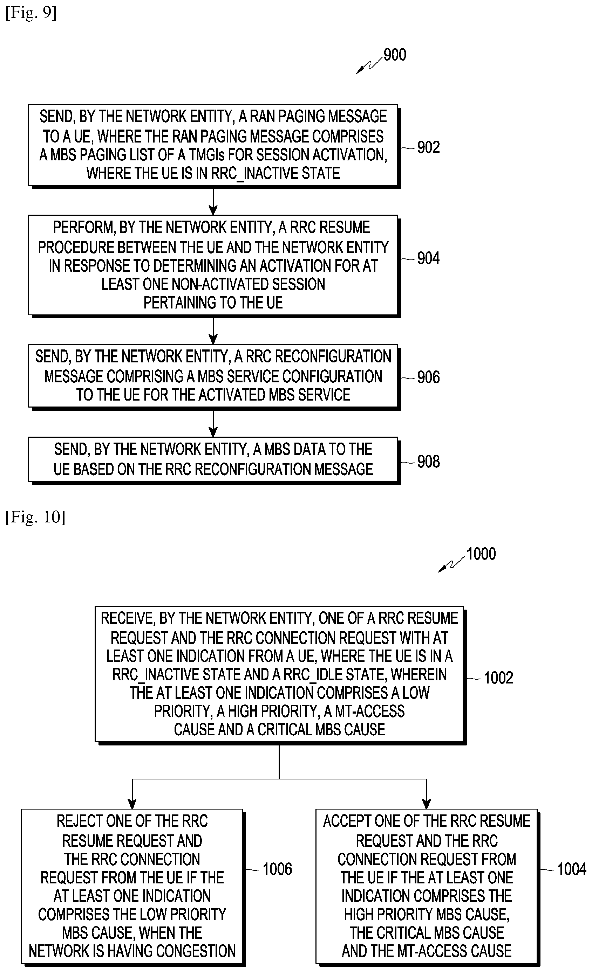

FIG. 9 is a flow chart 900 illustrating a method, implemented by the network 200, for handling the service notification and configuration for the MBS in the 5G communication network 300 based on the RAN paging message according to embodiments as disclosed herein. The operations 902-908 are handled by the MBS service notification and configuration controller 240.

At 902, the method includes sending the RAN paging message to the UE 100. The RAN paging message includes an MBS paging list of a TMGIs for session activation and the UE 100 is in an RRC_INACTIVE state. At 904, the method includes performing the RRC resume procedure between the UE 100 and the network entity 200 in response to determining the activation for at least one non-activated session pertaining to the UE 100 based on the RAN paging message.

At 906, the method includes sending the RRC reconfiguration message comprising the MBS service configuration to the UE 100 for the activated MBS service. At 908, the method includes sending the MBS data to the UE 100 based on the RRC reconfiguration message.

FIG. 10 is a flow chart 1000 illustrating a method, implemented by the network 200, for handling the service notification and configuration for the MBS in the 5G communication network 300 according to embodiments as disclosed herein. The operations 902-906 are handled by the MBS service notification and configuration controller 240.

At 1002, the method includes receiving one of a RRC resume request and a RRC connection request with at least one indication from the UE 100. The UE 100 is in one of an RRC_INACTIVE state and an RRC_IDLE state. The indication comprises a low priority MBS cause, a high priority MBS cause, a mt-access cause, a critical MBS cause. At 1004, the method includes accepting one of the RRC resume request and the RRC connection request from the UE 100 if the at least one indication comprises a high priority MBS cause, the mt-access cause and the critical MBS cause. At 1006, the method includes rejecting one of the RRC resume request and the RRC connection request from the UE 100 if the at least one indication comprises a low priority MBS cause, when the 5G communication network 300 is having congestion

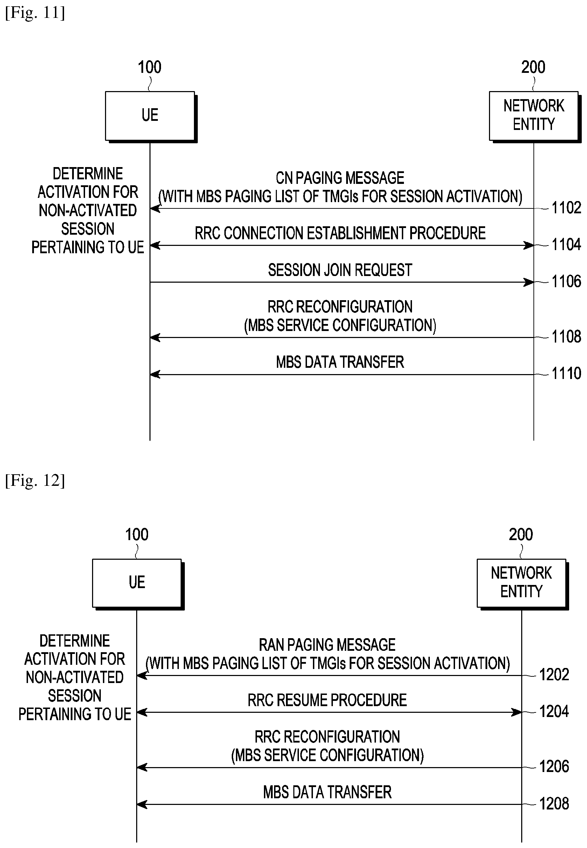

FIG. 11 is a sequence flow diagram illustrating step by step operations for handling the service notification and configuration for the MBS in the 5G communication network 300 based on the CN paging message according to embodiments as disclosed herein.

At 1102, the UE 100 receives the CN paging message from the network entity 200. The CN paging message includes the MBS paging list of the TMGIs for session activation. The UE 100 is in the RRC_IDLE state. Further, the UE 100 determines the activation for the non-activated session pertaining to the UE 100 based on the CN paging message. At 1104, the RRC connection establishment procedure is performed between the UE 100 and the network entity 200.

At 1106, the UE 100 sends the session join request to the network entity 200 based on the RRC connection establishment procedure. At 1108, the UE 100 receives the RRC reconfiguration message comprising the MBS service configuration from the network entity 200 for the activated MBS service based on the session join request. At 1110, the UE 100 receives the MBS data from the network entity 200 based on the RRC reconfiguration message.

FIG. 12 is a sequence flow diagram illustrating step by step operations for handling the service notification and configuration for the MBS in the 5G communication network 300 based on the RAN paging message according to embodiments as disclosed herein.

At 1202, the UE 100 receives the RAN paging message from the network entity 200, where the RAN paging message comprises an MBS paging list of the TMGIs for session activation. The UE 100 is in the RRC_INACTIVE state. Further, the UE 100 determines the activation for the non-activated session pertaining to the UE 100 based on the RAN paging message.

At 1204, the RRC resume procedure is performed between the UE 100 and the network entity 200. At 1206, the UE 100 receives the RRC reconfiguration message comprising the MBS service configuration from the network entity 200 for the activated MBS service. At 1208, the UE 100 receives the MBS data from the network entity 200 based on the RRC reconfiguration message.

The method can be used to enable a reliable delivery of MBS services by introducing split radio bearer (i.e., PTP + PTM). The method can be used for group notifications for UEs in an idle/inactive state about MBS services which is more efficient when compared to legacy methods (unicast paging).

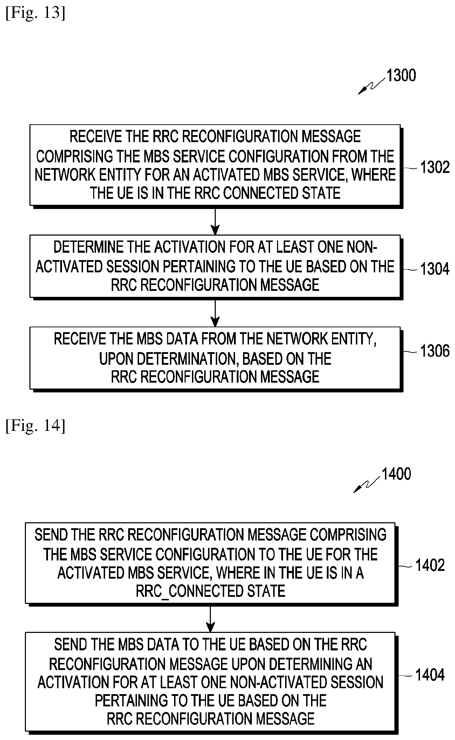

FIG. 13 is a flow chart 1300 illustrating a method, implemented by the UE 100, for handling a service notification and configuration for the MBS in the 5G communication network 300, when the UE 100 is in the RRC CONNECTED state. according to embodiments as disclosed herein. The operations 1302-1306 are handled by the MBS service notification and configuration controller 140.

At 1302, the method includes receiving the RRC reconfiguration message comprising the MBS service configuration from the network entity 200 for an activated MBS service. The UE 100 is in the RRC CONNECTED state. At 1304, the method includes determining the activation for at least one non-activated session pertaining to the UE 100 based on the RRC reconfiguration message. At 1306, the method includes receiving the MBS data from the network entity 200, upon determination, based on the RRC reconfiguration message.

FIG. 14 is a flow chart 1400 illustrating a method, implemented by the network entity 200, for handling the service notification and configuration for the MBS in the 5G communication network 300, when the UE 100 is in the RRC CONNECTED state according to embodiments as disclosed herein. The operations 1402 and 1404 are handled by the MBS service notification and configuration controller 240.

At 1402, the method includes sending the RRC reconfiguration message comprising the MBS service configuration to the UE 100 for the activated MBS service, wherein the UE 100 is in an RRC_CONNECTED state. At 1404, the method includes sending the MBS data to the UE 100 based on the RRC reconfiguration message upon determining an activation for at least one non-activated session pertaining to the UE 100 based on the RRC reconfiguration message.

The various actions, acts, blocks, steps, or the like in the flow charts 500-1000, 1300 and 1400 may be performed in the order presented, in a different order or simultaneously. Further, in some embodiments, some of the actions, acts, blocks, steps, or the like may be omitted, added, modified, skipped, or the like without departing from the scope of the disclosure.

The embodiments disclosed herein can be implemented through at least one software program running on at least one hardware device and performing network management functions to control the elements. The elements can be at least one of a hardware device, or a combination of hardware device and software module.

Although the present disclosure has been described with various embodiments, various changes and modifications may be suggested to one skilled in the art. It is intended that the present disclosure encompass such changes and modifications as fall within the scope of the appended claims.
device to make a determination or prediction. Examples of learning algorithms include, but are not limited to, supervised learning, unsupervised learning, semi-supervised learning, or reinforcement learning.

Although the FIG. 4 shows various hardware components of the network entity 200 but it is to be understood that other embodiments are not limited thereon. In other embodiments, the network entity 200 may include less or more number of components. Further, the labels or names of the components are used only for illustrative purpose and does not limit the scope of the disclosure. One or more components can be combined together to perform same or substantially similar function in the network entity 200.

FIG. 5 is a flow chart 500 illustrating a method, implemented by the UE 100, for handling the service notification and configuration for the MBS in the 5G communication network 300 based on the MBS information according to embodiments as disclosed herein. The operations 502-512 are handled by the MBS service notification and configuration controller 140.

At 502, the method includes receiving the MBS information through the SIB or the MCCH. The MBS information comprises a list of MBS services. At 504, the method includes indicating the available list of MBS services to a service layer of the UE 100 from a lower layer of the UE 100 based on the received MBS information. At 506, the method includes synchronizing an MBS service list in the USD with the available list of MBS services based on the indication. At 508, the method includes determining the available MBS service or the unavailable MBS service in the USD.

At 510, the method includes identifying an interested MBS service from the available MBS service and triggering a service join procedure. At 512, the method includes identifying the interested MBS service from the unavailable MBS service and sending an interest indication message to the network entity 200. The interest indication message includes information associated with the interested MBS service.

FIG. 6 is a flow chart 600 illustrating a method, implemented by the UE 100, for handling the service notification and configuration for the MBS in the 5G communication network 300 based on the CN paging message according to embodiments as disclosed herein. The operations 602-612 are handled by the MBS service notification and configuration controller 140.

At 602, the method includes receiving the CN paging message from the network entity 200. The CN paging message includes the MBS paging list of a TMGIs for session activation. The UE 100 is in the RRC_IDLE state. At 604, the method includes determining the activation for the non-activated session pertaining to the UE 100 based on the CN paging message. At 606, the method includes performing the RRC connection establishment procedure between the UE 100 and the network entity 200.

At 608, the method includes sending the session join request to the network entity 200 based on the RRC connection establishment procedure. At 610, the method includes receiving the RRC reconfiguration message comprising an MBS service configuration from the network entity 200 for the activated MBS service based on the session join request. At 612, the method includes receiving the MBS data from the network entity 200 based on the RRC reconfiguration message.

FIG. 7 is a flow chartn 700 illustrating a method, implemented by the UE 100, for handling the service notification and configuration for the MBS in the 5G communication network 300 based on the RAN paging message according to embodiments as disclosed herein. The operations 702-710 are handled by the MBS service notification and configuration controller 140.

At 702, the method includes receiving the RAN paging message from the network entity 200, where the RAN paging message comprises an MBS paging list of a TMGIs for session activation. The UE 100 is in an RRC_INACTIVE state. At 704, the method includes determining the activation for the non-activated session pertaining to the UE 100 based on the RAN paging message.

At 706, the method includes performing the RRC resume procedure between the UE 100 and the network entity 200. At 708, the method includes receiving the RRC reconfiguration message comprising an MBS service configuration from the network entity 200 for the activated MBS service. At 710, the method includes receiving an MBS data from the network entity 200 based on the RRC reconfiguration message.

FIG. 8 is a flow chart 800 illustrating a method, implemented by the network 200, for handling the service notification and configuration for the MBS in the 5G communication network 300 based on the CN paging message according to embodiments as disclosed herein. The operations 802-810 are handled by the MBS service notification and configuration controller 240.

At 802, the method includes sending the CN paging message to the UE 100. The CN paging message includes an MBS paging list of a TMGIs for session activation and the UE 100 is in an RRC_IDLE state. At 804, the method includes performing the RRC connection establishment procedure between the UE 100 and the network entity 200 in response to determining an activation for at least one non-activated session pertaining to the UE 100 based on the CN paging message. At 806, the method includes receiving the session join request from the UE 100 based on the RRC connection establishment procedure.

At 808, the method includes sending the RRC reconfiguration message comprising an MBS service configuration to the UE 100 for the activated MBS service based on the session join request. At 810, the method includes sending an MBS data to the UE 100 based on the RRC reconfiguration message.

FIG. 9 is a flow chart 900 illustrating a method, implemented by the network 200, for handling the service notification and configuration for the MBS in the 5G communication network 300 based on the RAN paging message according to embodiments as disclosed herein. The operations 902-908 are handled by the MBS service notification and configuration controller 240.

At 902, the method includes sending the RAN paging message to the UE 100. The RAN paging message includes an MBS paging list of a TMGIs for session activation and the UE 100 is in an RRC_INACTIVE state. At 904, the method includes performing the RRC resume procedure between the UE 100 and the network entity 200 in response to determining the activation for at least one non-activated session pertaining to the UE 100 based on the RAN paging message.

At 906, the method includes sending the RRC reconfiguration message comprising the MBS service configuration to the UE 100 for the activated MBS service. At 908, the method includes sending the MBS data to the UE 100 based on the RRC reconfiguration message.

FIG. 10 is a flow chart 1000 illustrating a method, implemented by the network 200, for handling the service notification and configuration for the MBS in the 5G communication network 300 according to embodiments as disclosed herein. The operations 902-906 are handled by the MBS service notification and configuration controller 240.

At 1002, the method includes receiving one of a RRC resume request and a RRC connection request with at least one indication from the UE 100. The UE 100 is in one of an RRC_INACTIVE state and an RRC_IDLE state. The indication comprises a low priority MBS cause, a high priority MBS cause, a mt-access cause, a critical MBS cause. At 1004, the method includes accepting one of the RRC resume request and the RRC connection request from the UE 100 if the at least one indication comprises a high priority MBS cause, the mt-access cause and the critical MBS cause. At 1006, the method includes rejecting one of the RRC resume request and the RRC connection request from the UE 100 if the at least one indication comprises a low priority MBS cause, when the 5G communication network 300 is having congestion

FIG. 11 is a sequence flow diagram illustrating step by step operations for handling the service notification and configuration for the MBS in the 5G communication network 300 based on the CN paging message according to embodiments as disclosed herein.

At 1102, the UE 100 receives the CN paging message from the network entity 200. The CN paging message includes the MBS paging list of the TMGIs for session activation. The UE 100 is in the RRC_IDLE state. Further, the UE 100 determines the activation for the non-activated session pertaining to the UE 100 based on the CN paging message. At 1104, the RRC connection establishment procedure is performed between the UE 100 and the network entity 200.

At 1106, the UE 100 sends the session join request to the network entity 200 based on the RRC connection establishment procedure. At 1108, the UE 100 receives the RRC reconfiguration message comprising the MBS service configuration from the network entity 200 for the activated MBS service based on the session join request. At 1110, the UE 100 receives the MBS data from the network entity 200 based on the RRC reconfiguration message.

FIG. 12 is a sequence flow diagram illustrating step by step operations for handling the service notification and configuration for the MBS in the 5G communication network 300 based on the RAN paging message according to embodiments as disclosed herein.

At 1202, the UE 100 receives the RAN paging message from the network entity 200, where the RAN paging message comprises an MBS paging list of the TMGIs for session activation. The UE 100 is in the RRC_INACTIVE state. Further, the UE 100 determines the activation for the non-activated session pertaining to the UE 100 based on the RAN paging message.

At 1204, the RRC resume procedure is performed between the UE 100 and the network entity 200. At 1206, the UE 100 receives the RRC reconfiguration message comprising the MBS service configuration from the network entity 200 for the activated MBS service. At 1208, the UE 100 receives the MBS data from the network entity 200 based on the RRC reconfiguration message.

The method can be used to enable a reliable delivery of MBS services by introducing split radio bearer (i.e., PTP + PTM). The method can be used for group notifications for UEs in an idle/inactive state about MBS services which is more efficient when compared to legacy methods (unicast paging).

FIG. 13 is a flow chart 1300 illustrating a method, implemented by the UE 100, for handling a service notification and configuration for the MBS in the 5G communication network 300, when the UE 100 is in the RRC CONNECTED state. according to embodiments as disclosed herein. The operations 1302-1306 are handled by the MBS service notification and configuration controller 140.

At 1302, the method includes receiving the RRC reconfiguration message comprising the MBS service configuration from the network entity 200 for an activated MBS service. The UE 100 is in the RRC CONNECTED state. At 1304, the method includes determining the activation for at least one non-activated session pertaining to the UE 100 based on the RRC reconfiguration message. At 1306, the method includes receiving the MBS data from the network entity 200, upon determination, based on the RRC reconfiguration message.

FIG. 14 is a flow chart 1400 illustrating a method, implemented by the network entity 200, for handling the service notification and configuration for the MBS in the 5G communication network 300, when the UE 100 is in the RRC CONNECTED state according to embodiments as disclosed herein. The operations 1402 and 1404 are handled by the MBS service notification and configuration controller 240.

At 1402, the method includes sending the RRC reconfiguration message comprising the MBS service configuration to the UE 100 for the activated MBS service, wherein the UE 100 is in an RRC_CONNECTED state. At 1404, the method includes sending the MBS data to the UE 100 based on the RRC reconfiguration message upon determining an activation for at least one non-activated session pertaining to the UE 100 based on the RRC reconfiguration message.

The various actions, acts, blocks, steps, or the like in the flow charts 500-1000, 1300 and 1400 may be performed in the order presented, in a different order or simultaneously. Further, in some embodiments, some of the actions, acts, blocks, steps, or the like may be omitted, added, modified, skipped, or the like without departing from the scope of the disclosure.

The embodiments disclosed herein can be implemented through at least one software program running on at least one hardware device and performing network management functions to control the elements. The elements can be at least one of a hardware device, or a combination of hardware device and software module.

Although the present disclosure has been described with various embodiments, various changes and modifications may be suggested to one skilled in the art. It is intended that the present disclosure encompass such changes and modifications as fall within the scope of the appended claims.

## Claims

1. A method of a user equipment, UE, (100) in a wireless communication network, the method comprising:
receiving (502), from a network entity (200), system information block, SIB, and a notification for multicast control channel, MCCH, information change;
receiving, from the network entity, multicast broadcast service, MBS, configuration information based on the notification, wherein the MBS configuration information is received on an MCCH;
transmitting (512), to the network entity, an interest indication message including a list of at least one MBS of interest, based on the SIB;
transmitting, to the network entity, a first message indicating UE capability including a maximum number of at least one radio network temporary identifier, RNTI, for a multicast; and
receiving, from the network entity, a second message including configuration information about at least one RNTI for an MBS.

2. The method of claim 1, further comprising:
establishing an MBS radio bearer, MRB, based on the MBS configuration information.

3. The method of claim 1, wherein the MBS configuration information includes:
point-to-multipoint, PTM, configuration information, and
neighbor cell information for an MBS in at least one neighbor cell.

4. The method of claim 1, wherein the MBS configuration information associated with each MBS comprises at least one field,
wherein the at least one field comprises:
at least one of a temporary mobile group identity, TMGI, of the MBS, a session identifier, ID,, a discontinuous reception, DRX, configuration for the MBS, neighbor cell information for the MBS, or a bandwidth part, BWP, over which MBS, is being delivered.

5. The method of claim 1, wherein cell reselection operation is performed with prioritizing at least one frequency for an MBS.

6. The method of claim 1, wherein the SIB is used for providing at least one of a MCCH configuration, a notification configuration, or control information,
wherein the SIB is transmitted by at least one of a periodical SIB transmission, or an on-demand SIB acquisition requested by the UE.

7. The method of claim 1, wherein the SIB is used for providing mapping of at least one of an MBS, frequencies for reception and service area identities, SAIs,
wherein the SIB is transmitted by at least one of a periodical SIB transmission, or an on-demand SIB acquisition requested by the UE.

8. A method of a network entity in a wireless communication network, the method comprising:
transmitting, to a user equipment, UE,, system information block, SIB, and a notification for multicast control channel, MCCH, information change;
transmitting, to the UE, multicast broadcast service, MBS, configuration information on the MCCH based on the notification, wherein the MBS configuration information is transmitted on an MCCH;
receiving, from the UE, an interest indication message including a list of at least one MBS of interest, based on the SBI;
receiving, from the UE, a first message indicating UE capability including a maximum number of at least one radio network temporary identifier, RNTI, for a multicast; and
transmitting, to the UE, a second message including configuration information about at least one RNTI for an MBS.

9. The method of claim 8, wherein the MBS configuration information is used to establish an MBS radio bearer , MRB,.

10. A user equipment, UE, in a wireless communication network, the UE comprising:
a transceiver; and
a controller coupled to the transceiver, and configured to:
receive, from a network entity, system information block, SIB, and a notification for multicast control channel, MCCH, information change;
receive, from the network entity, multicast broadcast service, MBS, configuration information based on the notification, wherein the MBS configuration information is received on an MCCH,
transmit, to the network entity, an interest indication message including a list of at least one MBS of interest, based on the SIB;
transmit, to the network entity, a first message indicating UE capability including a maximum number of at least one radio network temporary identifier, RNTI, for a multicast, and
receive, from the network entity, a second message including configuration information about at least one RNTI for an MBS.

11. The UE of claim 10, further comprising:
establishing an MBS radio bearer, MRB, based on the MBS configuration information.

12. The UE of claim 10, wherein the controller is further configured to operate based on one of methods according to claims 3 to 7.

13. A network entity in a wireless communication network, the network entity comprising:
a transceiver; and
a controller coupled to the transceiver, and configured to:
transmit, to a user equipment, UE, system information block, SIB, and a notification for multicast control channel, MCCH, information change;
transmit, to the UE, multicast broadcast service, MBS, configuration information based on the notification, wherein the MBS configuration information is transmitted on an MCCH,
receive, from the UE, an interest indication message including a list of at least one MBS of interest, based on the SBI,
receive, from the UE, a first message indicating UE capability including a maximum number of at least one radio network temporary identifier, RNTI, for a multicast, and
transmit, to the UE, a second message including configuration information about at least one RNTI for an MBS.

14. The network entity of claim 13, wherein the MBS configuration information is used to establish an MBS radio bearer, MRB.

## Patentansprüche

1. Verfahren eines Benutzergeräts, UE, (100) in einem drahtlosen Kommunikationsnetzwerk, wobei das Verfahren Folgendes umfasst:
Empfangen (502), von einer Netzwerkeinheit (200), eines Systeminformationsblocks, SIB, und einer Benachrichtigung für eine Multicast-Steuerkanal-Informationsänderung, MCCH-Informationsänderung;
Empfangen, von der Netzwerkeinheit, von Multicast-Broadcast-Dienst-Konfigurationsinformationen, MBS-Konfigurationsinformationen, basierend auf der Benachrichtigung, wobei die MBS-Konfigurationsinformationen auf einem MCCH empfangen werden;
Übertragen (512), an die Netzwerkeinheit, einer Interessenanzeigenachricht, die eine Liste von wenigstens einem MBS von Interesse umfasst, basierend auf dem SIB;
Übertragen, an die Netzwerkeinheit, einer ersten Nachricht, die die UE-Fähigkeit anzeigt und eine maximale Anzahl von wenigstens einer temporären Funknetzkennung, RNTI, für einen Multicast umfasst; und
Empfangen, von der Netzwerkeinheit, einer zweiten Nachricht, die Konfigurationsinformationen über wenigstens eine RNTI für einen MBS umfasst.

2. Verfahren nach Anspruch 1, das ferner Folgendes umfasst:
Einrichten eines MBS-Funkträgers, MRB, basierend auf den MBS-Konfigurationsinformationen.

3. Verfahren nach Anspruch 1, wobei die MBS-Konfigurationsinformationen Folgendes umfassen:
Punkt-zu-Multipunkt-Konfigurationsinformationen, PTM-Konfigurations-informationen, und
Nachbarzelleninformationen für einen MBS in wenigstens einer Nachbarzelle.

4. Verfahren nach Anspruch 1, wobei die MBS-Konfigurationsinformationen, die mit jedem MBS assoziiert sind, wenigstens ein Feld umfassen,
wobei das wenigstens eine Feld Folgendes umfasst:
wenigstens eines aus einer temporären Mobilgruppenidentität, TMGI, des MBS, einem Sitzungsidentifikator, ID, einer diskontinuierlichen Empfangskonfiguration, DRX-Konfiguration, für den MBS, Nachbarzelleninformationen für den MBS oder einem Bandbreitenteil, BWP, über den der MBS geliefert wird.

5. Verfahren nach Anspruch 1, wobei eine Zellenneuauswahloperation mit Priorisierung wenigstens einer Frequenz für einen MBS durchgeführt wird.

6. Verfahren nach Anspruch 1, wobei der SIB zur Bereitstellung von wenigstens einer aus einer MCCH-Konfiguration, einer Benachrichtigungskonfiguration oder von Steuerinformationen verwendet wird,
wobei der SIB durch wenigstens eine aus einer periodischen SIB-Übertragung oder einer von dem UE angeforderte SIB-Akquisition auf Abruf übertragen wird.

7. Verfahren nach Anspruch 1, wobei der SIB zur Bereitstellung einer Zuordnung von wenigstens einem aus einem MBS, Frequenzen für den Empfang oder Dienstbereichskennungen, SAIs, verwendet wird,
wobei der SIB durch wenigstens eine periodische SIB-Übertragung oder eine von dem UE angeforderte SIB-Akquisition auf Abruf übertragen wird.

8. Verfahren einer Netzwerkeinheit in einem drahtlosen Kommunikationsnetzwerk, wobei das Verfahren Folgendes umfasst:
Übertragen, an ein Benutzergerät, UE, eines Systeminformationsblocks, SIB, und einer Benachrichtigung für eine Multicast-Steuerkanal-Informationsänderung, MCCH-Informationsänderung;
Übertragen, an das UE, von Multicast-Broadcast-Dienst-Konfigurationsinformationen, MBS-Konfigurationsinformationen, auf dem MCCH basierend auf der Benachrichtigung, wobei die MBS-Konfigurationsinformationen auf einem MCCH übertragen werden;
Empfangen, von dem UE, einer Interessenanzeigenachricht, die eine Liste von wenigstens einem MBS von Interesse umfasst, basierend auf dem SIB;
Empfangen, von dem UE, einer ersten Nachricht, die die UE-Fähigkeit anzeigt und eine maximale Anzahl von wenigstens einer temporären Funknetzkennung, RNTI, für einen Multicast umfasst; und
Übertragen, an das UE, einer zweiten Nachricht, die Konfigurationsinformationen über wenigstens eine RNTI für einen MBS umfasst.

9. Verfahren nach Anspruch 8, wobei die MBS-Konfigurationsinformationen verwendet werden, um einen MBS-Funkträger, MRB, einzurichten.

10. Benutzergerät, UE, in einem drahtlosen Kommunikationsnetzwerk, wobei das UE Folgendes umfasst:
einen Sendeempfänger; und
eine Steuerung, die mit dem Sendeempfänger gekoppelt und zu Folgendem konfiguriert ist:
Empfangen, von einer Netzwerkeinheit, eines Systeminformationsblocks, SIB, und einer Benachrichtigung für eine Multicast-Steuerkanal-Informationsänderung, MCCH-Informationsänderung;
Empfangen, von der Netzwerkeinheit, von Multicast-Broadcast-Dienst-Konfigurationsinformationen, MBS-Konfigurationsinformationen, basierend auf der Benachrichtigung, wobei die MBS-Konfigurationsinformationen auf einem MCCH empfangen werden,
Übertragen, an die Netzwerkeinheit, einer Interessenanzeigenachricht, die eine Liste von wenigstens einem MBS von Interesse umfasst, basierend auf dem SIB;
Übertragen, an die Netzwerkeinheit, einer ersten Nachricht, die die UE-Fähigkeit anzeigt und eine maximale Anzahl von wenigstens einer temporären Funknetzkennung, RNTI, für einen Multicast umfasst, und
Empfangen, von der Netzwerkeinheit, einer zweiten Nachricht, die Konfigurationsinformationen über wenigstens eine RNTI für einen MBS umfasst.

11. UE nach Anspruch 10, das ferner Folgendes umfasst:
Einrichten eines MBS-Funkträgers, MRB, basierend auf den MBS-Konfigurationsinformationen.

12. UE nach Anspruch 10, wobei die Steuerung ferner dazu konfiguriert ist, basierend auf einem der Verfahren nach den Ansprüchen 3 bis 7 zu arbeiten.

13. Netzwerkeinheit in einem drahtlosen Kommunikationsnetzwerk, wobei die Netzwerkeinheit Folgendes umfasst:
einen Sendeempfänger; und
eine Steuerung, die mit dem Sendeempfänger gekoppelt und zu Folgendem konfiguriert ist:
Übertragen, an ein Benutzergerät, UE, eines Systeminformationsblocks, SIB, und einer Benachrichtigung für eine Multicast-Steuerkanal-Informationsänderung, MCCH-Informationsänderung;
Übertragen, an das UE, von Multicast-Broadcast-Dienst-Konfigurationsinformationen, MBS-Konfigurationsinformationen, basierend auf der Benachrichtigung, wobei die MBS-Konfigurationsinformationen auf einem MCCH übertragen werden,
Empfangen, von dem UE, einer Interessenanzeigenachricht, die eine Liste von wenigstens einem MBS von Interesse umfasst, basierend auf dem SIB,
Empfangen, von dem UE, einer ersten Nachricht, die die UE-Fähigkeit anzeigt und eine maximale Anzahl von wenigstens einer temporären Funknetzkennung, RNTI, für einen Multicast umfasst, und
Übertragen, an das UE, einer zweiten Nachricht, die Konfigurationsinformationen über wenigstens eine RNTI für einen MBS umfasst.

14. Netzwerkeinheit nach Anspruch 13, wobei die MBS-Konfigurationsinformationen verwendet werden, um einen MBS-Funkträger, MRB, einzurichten.

## Revendications

1. Procédé d'un équipement utilisateur, UE, (100) dans un réseau de communication sans fil, ledit procédé comprenant :
la réception (502), en provenance d'une entité de réseau (200), d'un bloc d'informations système, SIB, et d'une notification pour un changement d'informations de canal de commande en multidiffusion, MCCH ;
la réception, en provenance de l'entité de réseau, d'informations de configuration de service de multidiffusion, MBS, sur la base de la notification, les informations de configuration de MBS étant reçus sur un MCCH ;
la transmission (512), à l'entité de réseau, d'un message d'indication d'intérêt comprenant une liste d'au moins un MBS d'intérêt, sur la base du SIB ;
la transmission, à l'entité de réseau, d'un premier message indiquant la capacité d'UE, comprenant le nombre maximal d'au moins un identifiant temporaire de réseau radio, RNTI, pour une multidiffusion ; et
la réception, en provenance de l'entité de réseau, d'un deuxième message comprenant des informations de configuration relatives à au moins un RNTI pour un MBS.

2. Procédé selon la revendication 1, comprenant en outre :
l'établissement d'une porteuse radio de MBS, MRB, sur la base des informations de configuration de MBS.

3. Procédé selon la revendication 1, où les informations de configuration de MBS comprennent :
des informations de configuration point-multipoint, PTM, et
des informations de cellule voisine pour un MBS dans au moins une cellule voisine.

4. Procédé selon la revendication 1, où les informations de configuration de MBS associées à chaque MBS comprennent au moins un champ,
où ledit au moins un champ comprend :
au moins un parmi une identité temporaire de groupe mobile, TMGI, du MBS, un identifiant de session, ID, une configuration de réception discontinue, DRX, pour le MBS, des informations de cellule voisine pour le MBS ou une partie de bande passante, BWP, sur laquelle le MBS est fourni.

5. Procédé selon la revendication 1, où une opération de re-sélection de cellule est effectuée en priorisant au moins une fréquence pour un MBS.

6. Procédé selon la revendication 1, où le SIB est utilisé pour fournir au moins une parmi une configuration de MCCH, une configuration de notification ou des informations de commande,
où le SIB est transmis par au moins une parmi une transmission périodique de SIB ou une acquisition de SIB sur demande de l'UE.

7. Procédé selon la revendication 1, où le SIB est utilisé pour fournir un mappage d'au moins un parmi un MBS, des fréquences pour des identités de zone de réception et de service, SAI,
où le SIB est transmis par au moins une parmi transmission périodique de SIB ou une acquisition de SIB sur demande de l'UE.

8. Procédé d'une entité de réseau dans un réseau de communication sans fil, ledit procédé comprenant :
la transmission, à un équipement utilisateur, UE, d'un bloc d'informations système, SIB, et d'une notification pour un changement d'informations de canal de commande en multidiffusion, MCCH ;
la transmission, à l'UE, d'informations de configuration de service de multidiffusion, MBS, sur la base de la notification, les informations de configuration de MBS étant transmises sur un MCCH ;
la réception, en provenance de l'UE, d'un message d'indication d'intérêt comprenant une liste d'au moins un MBS d'intérêt, sur la base du SIB ;
la réception, en provenance de l'UE, d'un premier message indiquant la capacité d'UE, comprenant le nombre maximal d'au moins un identifiant temporaire de réseau radio, RNTI, pour une multidiffusion ; et
la transmission, à l'UE, d'un deuxième message comprenant des informations de configuration relatives à au moins un RNTI pour un MBS.

9. Procédé selon la revendication 8, où les informations de configuration de MBS sont utilisées pour l'établissement d'une porteuse radio de MBS, MRB.

10. Équipement utilisateur, UE, dans un réseau de communication sans fil, ledit UE comprenant :
un émetteur-récepteur ; et
un contrôleur relié à l'émetteur-récepteur et configuré pour :
recevoir, en provenance d'une entité de réseau, un bloc d'information système, SIB, et une notification pour un changement d'informations de canal de commande en multidiffusion, MCCH ;
recevoir, en provenance de l'entité de réseau, des informations de configuration de service de multidiffusion, MBS, sur la base de la notification, les informations de configuration de MBS étant reçus sur un MCCH ;
transmettre, à l'entité de réseau, un message d'indication d'intérêt comprenant une liste d'au moins un MBS d'intérêt, sur la base du SIB ;
transmettre, à l'entité de réseau, un premier message indiquant la capacité d'UE, comprenant le nombre maximal d'au moins un identifiant temporaire de réseau radio, RNTI, pour une multidiffusion ; et
recevoir, en provenance de l'entité de réseau, un deuxième message comprenant des informations de configuration relatives à au moins un RNTI pour un MBS.

11. UE selon la revendication 10, comprenant en outre :
l'établissement d'une porteuse radio de MBS, MRB, sur la base des informations de configuration de MBS.

12. Unité de commande selon la revendication 10, où le contrôleur est en outre configuré pour fonctionner sur la base d'un des procédés selon les revendications 3 à 7.

13. Entité de réseau dans un réseau de communication sans fil, ladite entité de réseau comprenant :
un émetteur-récepteur ; et
un contrôleur relié à l'émetteur-récepteur et configuré pour :
transmettre, à un équipement utilisateur, UE, un bloc d'informations système, SIB, et une notification pour un changement d'informations de canal de commande en multidiffusion, MCCH ;
transmettre, à l'UE, des informations de configuration de service de multidiffusion, MBS, sur la base de la notification, les informations de configuration de MBS étant transmises sur un MCCH ;
recevoir, en provenance de l'UE, un message d'indication d'intérêt comprenant une liste d'au moins un MBS d'intérêt, sur la base du SIB ;
recevoir, en provenance de l'UE, un premier message indiquant la capacité d'UE, comprenant le nombre maximal d'au moins un identifiant temporaire de réseau radio, RNTI, pour une multidiffusion ; et
transmettre, à l'UE, un deuxième message comprenant des informations de configuration relatives à au moins un RNTI pour un MBS.

14. Entité de réseau selon la revendication 13, où les informations de configuration de MBS sont utilisées pour l'établissement d'une porteuse radio de MBS, MRB.
